# EUROPÄISCHE PATENTSCHRIFT

(11) **EP 1 177 610 B1**
(45) Veröffentlichungstag und Bekanntmachung des Hinweises auf die Patenterteilung: **18.05.2011**
(21) Anmeldenummer: 01913608.4
(22) Anmeldetag: 09.02.2001
(51) Int. Cl.: H02K 15/16, H02K 7/08, H02K 7/116, B21K 1/06

(54) **VERFAHREN ZUM HERSTELLEN EINER WELLE SOWIE EINE SOLCHE WELLE BEINHALTENDE VORRICHTUNG**
METHOD FOR PRODUCING A SHAFT AND A DEVICE CONTAINING A SHAFT OF THIS TYPE
PROCEDE DE FABRICATION D'UN ARBRE ET DISPOSITIF COMPRENANT UN TEL ARBRE

(30) Priorität: 28.02.2000 DE 10009053; 21.06.2000 DE 10030353
(43) Veröffentlichungstag der Anmeldung: 06.02.2002
(73) Patentinhaber: ROBERT BOSCH GMBH, 70442 Stuttgart (DE)
(72) Erfinder: KARL, Martin, 77887 Sasbachwalden (DE)
(86) Internationale Anmeldenummer: PCT/DE2001/000497
(87) Internationale Veröffentlichungsnummer: WO 2001/065668

(56) Entgegenhaltungen:
- DE-A- 3 900 186
- US-A- 2 133 091
- US-A- 5 794 326
- US-A- 5 829 911

## Beschreibung

### Stand der Technik

Die Erfindung betrifft ein Verfahren zum Herstellen einer Welle sowie eine Vorrichtung beinhaltend eine solche Welle nach der Gattung der unabhängigen Ansprüche.

Mit dem deutschen Gebrauchsmuster GM 297 02 525.2 ist eine Vorrichtung bekannt geworden, die beispielsweise zum Verschieben von Fensterscheiben, Schiebedächern oder Sitzen eingesetzt wird. Um ein unerwünschtes Längsspiel der Ankerwelle zu vermeiden wird dort vorgeschlagen, an zumindest einer ihrer Stirnseiten ein Dämpfungsgummi in eine Ausnehmung des Gehäuses einzupressen. Die Ankerwelle drückt eine Anlaufscheibe gegen dieses Dämpfgummi. Durch die feste Arretierung und die elastischen Eigenschaften des Dämpfgummis bleibt die Ankerwelle trotz Alterungsprozesse und Verschleißerscheinungen auf lange Zeit zuverlässig räumlich fest fixiert. Auch läßt sich die Ankerwelle in Verbindung mit dem Dämpfgummi sehr einfach und kostengünstig montieren. Allerdings begrenzt die Eliminierung des Ankerlängsspiels mittels eines solchen Dämpfgummis die maximal zulässige Toleranz bei der Herstellung der Ankerwelle. Engere Toleranzen führen aber zu höheren

### Austauschseite 2

Fertigungskosten, was bei einer Massenfertigung der Ankerwelle unerwünscht ist.

Die DE-A-3900186, die US-2133091 und die US-A-5829911 zeigen Hohlwellen, bei denen eine Längenänderung mittels Drücken, Pressen oder Hämmern durchgeführt wird.

### Vorteile der Erfindung

Das erfindungsgemäße Verfahren mit den Merkmalen des Anspruchs 1 hat den Vorteil, dass weiterhin der günstige Axialspielausgleich mit dem Dämpfungsgummi angewendet werden kann, auch wenn die Welle bei der Herstellung nicht sehr genau auf Länge gefertigt wird. Durch die Einführung eines zusätzlichen Arbeitsschrittes läßt sich die herstellungsbedingte, toleranzbehaftete Länge der Welle von der Eliminierung des Axialspiels der Welle entkoppeln. Dies erlaubt auch eine sehr kostengünstige und einfache Herstellung der Schnecke auf der Ankerwelle. Das Axialspiel wird gegenüber früheren Lösungen noch sicherer unterdrückt, da die Gesamttoleranzen nach der Materialverdrängung deutlich geringer sind als bisher. Dadurch erhöht sich die Lebensdauer der Ankerwelle und bei Drehrichtungsänderung auftretende Klackgeräusche werden sicher vermieden. Die Materialverdrängung mittels Rollieren stellt einen kostengünstigen, exakten und einfach zu handhabenden Prozess dar. Das Rollieren bewirkt eine stetige Verlängerung der Welle, die gut zu kontrollieren ist. Durch das Rollieren entsteht eine gleichmäßige Einschnürung, die sich auch sehr vorteilhaft auf die Stabilität der Welle auswirkt

Durch die in den Unteransprüchen aufgeführten Merkmale sind vorteilhafte Weiterbildungen des Verfahrens nach Anspruch 1 möglich. Erfolgt die Materialverdrängung in der Nähe eines Endes der Welle, so bleibt die Stabilität der Welle über die gesamte Länge weitgehend erhalten. Auch beansprucht die Materialverdrängung an dieser Stelle keinen zusätzlichen Bauraum.

### Austauschseite 3

Wird die Länge der Welle während der Materialverdrängung gemessen, kann das Sollmaß der Welle in einem Arbeitsgang schnell und exakt erreicht werden.

Als besonders günstig erweist es sich, wenn in den Poltopf des Elektromotors die Welle vor dem Beginn der Materialverdrängung eingebaut wird. Dadurch werden die sich aufsummierenden Toleranzen eliminiert. Außerdem liegt die Ankerwelle dann in "ihren" Lagern, so dass insbesondere beim Rollieren der Materialverdrängung die Maßhaltigkeit und die Lage der Materialverdrängung auf den späteren Einsatzort abgestimmt werden können.

Es ist von Vorteil die Länge des über den Poltopf herausstehenden Teils der eingebauten Welle zu messen, weil die Welle dadurch auf das Sollmaß im eingebauten Zustand gefertigt werden kann. Dadurch lassen sich die Gesamttoleranzen des Axialspiel deutlich reduzieren.

Eine weitere Alternative stellt das Messen des Axialspielsollwerts während der Materialverdrängung bei eingebautem Zustand der Welle dar. Dies hat den Vorteil, dass der letztendlich interessierende Messwert - das Axialspiel - direkt gemessen und durch die Materialverdrängung exakt auf das Sollmaß eingestellt werden kann. Bei diesem Verfahren werden alle Herstellungs-und Einbautoleranzen vollständig eliminiert.

Ein weiterer Vorteil der Materialverdrängung mittels Rollieren ist die effiziente Prozesstechnik. Mit nur einem Werkzeug kann sowohl die Schnecke der Ankerwelle gefertigt, als auch die Materialverdrängung durchgeführt werden. Auch wenn je ein Werkzeug für das Rollieren der Schnecke und das Rollieren der Materialverdrängung eingesetzt wird, ist ein kompletter Arbeitsschritt gespart, da die Welle für diesen Vorgang nur einmal eingespannt werden muß. Dies ermöglicht eine schnelle und kostengünstige Produktion.

Die erfindungsgemäße Vorrichtung mit den Merkmalen des unabhängigen Anspruchs 9 hat den Vorteil, daß trotz ursprünglich großer Fertigungstoleranzen der Welle nach dem Einbau ein hochwertiges Erzeugnis mit engen Toleranzen geschaffen ist.

Die am Ende der Welle gelegene Materialverdrängung und die halbkreisförmige Querschnittsfläche der ringsum laufenden Nut wirken sich vorteilhaft auf den Stabilitätserhalt der Welle aus. Von Vorteil ist es, daß die Reduzierung des Wellendurchmessers bis auf die Hälfte des ursprünglichen Wertes erfolgen kann.

### Zeichnung

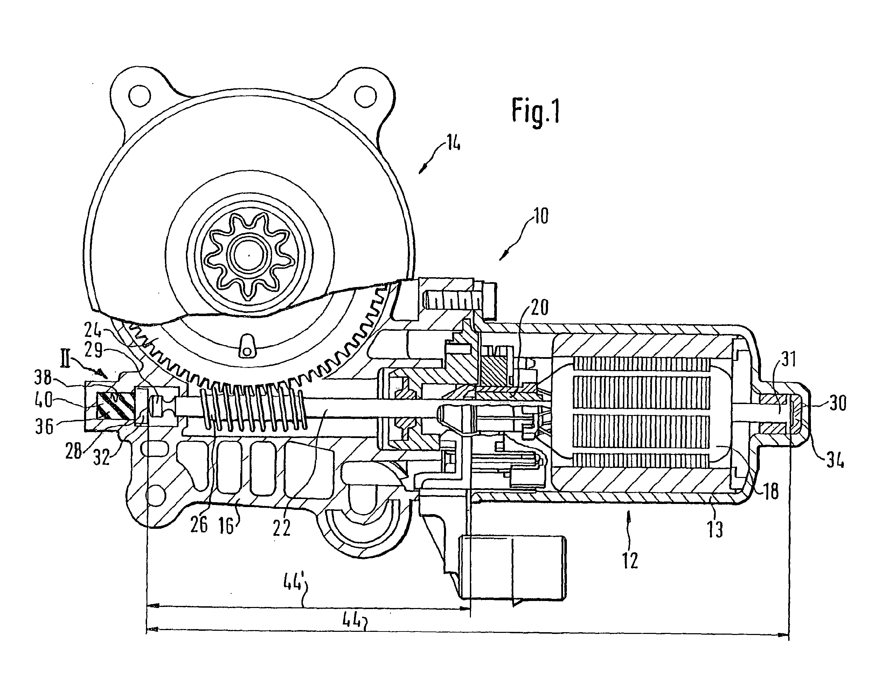

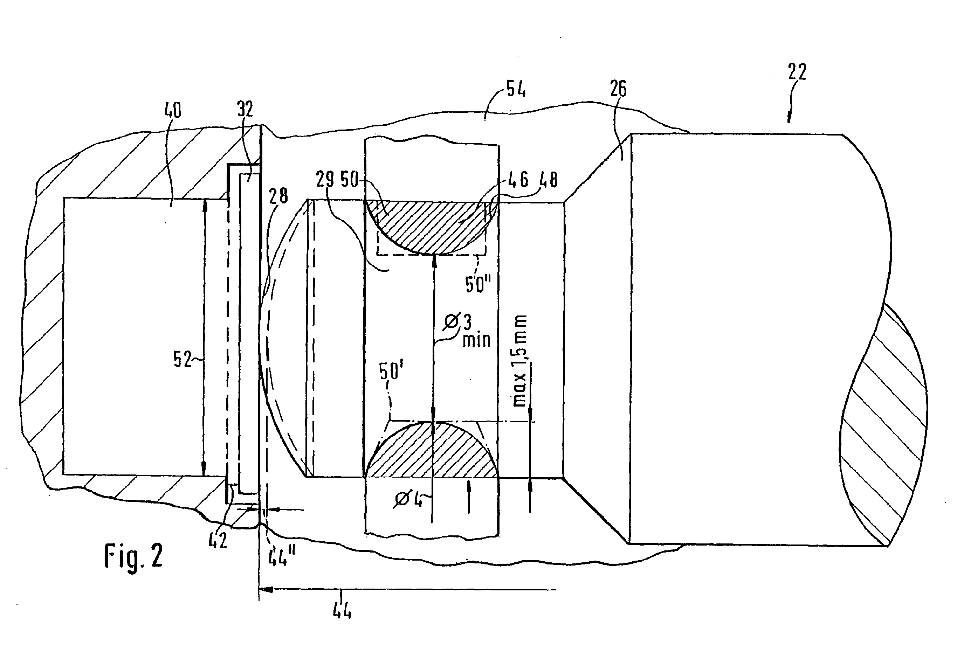

In der Zeichnung ist ein Ausführungsbeispiel einer erfindungsgemäßen Vorrichtung dargestellt und in der nachfolgenden Beschreibung näher erläutert. Es zeigen Figur 1 eine Vorrichtung im Schnitt, Figur 2 einen vergrößerten Ausschnitt der Welle nach II in Figur 1.

### Beschreibung

In Figur 1 ist ein Verstellantrieb 10 dargestellt mit einem Motor 12 und einem ein Getriebe 14 umgebenden mehrteiligen Gehäuse 16. Der Motor 12 ist elektrisch kommutiert und weist einen Anker 18, einen Kommutator 20 und eine mehrfach gelagerte Ankerwelle 22 auf, die sich bis in den Bereich des Getriebes 14 erstreckt. Auf der Ankerwelle 22 ist eine Schnecke 26 aufrolliert, die mit einem Schneckenrad 24 kommuniziert. An den Stirnseiten 28 und 30 der Ankerwelle 22 ist diese über Anlaufscheiben 32 und 34 sowie über ein Dämpfungsmittel 36 am Gehäuse 16 bzw. einem Teil des Gehäuses 16 abgestützt.

Im Bereich der Stirnseite 28 der Ankerwelle 22 weist das Gehäuse 16 eine Ausnehmung 38 auf, in die ein Dämpfungsgummi 40 als Dämpfungsmittel 36 eingepreßt ist. Das Dämpfgummi 40 hat einen fest vorgegebenen elastischen Bereich 42. Somit besteht der erfindungsgemäße Gedanke darin, daß die Toleranzen der Ankerwelle 22 und der Gehäuseteile 16 zusammen mit den Montagetoleranzen das Maß des elastischen Bereichs 42 (siehe Figur 2) nicht übersteigen dürfen, um ein Spiel der Ankerwelle wirkungsvoll zu unterbinden. Anstelle des Dämpfgummis 40 sind auch andere Dämpfungsmittel 36 wie Federelemente oder starre Anschläge denkbar.

Um eine solch enge Toleranz einzuhalten, wird erfindungsgemäß nach dem Aufrollieren der Schnecke 26 die Welle 22 mittels Materialverdrängung 46 auf ein Sollmaß 44 gebracht. Die Toleranz dieses Sollmaßes 44 ist deutlich kleiner als der elastische Bereich 42 des Dämpfgummis 40. Die Materialverdrängung 46 wird durch eine Einschnürung der Welle 22 realisiert, wodurch die Länge der Welle 22 zunimmt. Die Materialverdrängung 46 ist an einem Endbereich 29 zwischen der Schnecke 26 und der Stirnseite 28 eingebracht, in einem Bereich, wo die Welle 22 nicht radial gelagert ist.

Es sind auch Verfahren der Materialverdrängung 46 vorstellbar, bei denen die Welle 22 gestaucht wird, was eine Verkürzung der Welle 22 zur Folge hätte. Theoretisch gibt es mehrere Stellen an der Welle 22, an denen eine Materialverdrängung 46 baulich nicht stören würde. Aber, um die Stabilität der Welle 22 insgesamt zu erhalten, bietet sich an, Material an den Enden 29,31 der Welle 22 im Bereich zu deren Stirnseiten 28,30 hin zu verdrängen.

Ein einfaches Verfahren zur Materialverdrängung 46 ist durch das Rollieren der Welle 22 an deren Ende 29 gegeben. Diese Methode ist deshalb anderen vorzuziehen, weil zur Herstellung der Schnecke 26 auf der Ankerwelle 22 sowieso eine Rolliereinrichtung 54 vorgehalten werden muß. Dabei kann die Rollierung zur Materialverdrängung 46 in einem Arbeitsschritt, das heißt gleichzeitig mit der Rollierung der Schnecke 26 vorgenommen oder aber auch während derselben Einspannung auf der Rolliermaschine 54 direkt nacheinander ausgeführt werden.

Während der Materialverdrängung 46 wird gleichzeitig die Länge der Welle 22 gemessen. Die Welle 22 wird solange deformiert, bis durch die Längenmessung der Ankerwelle 22 das Sollmaß 44 angezeigt wird. Das Sollmaß 44 bezieht sich dabei auf die gesamte Länge der Ankerwelle 22 zwischen deren beiden Stirnseiten 28,30.

In einem zweiten Ausführungsbeispiel ist die Ankerwelle 22 vor deren Längenänderung in einen Teil des Gehäuses 16, hier in ein Poltopfgehäuse 13, eingebaut. Dabei wird der über den Poltopf 13 hinausragende Teil der Ankerwelle 22 simultan während deren Materialverdrängung 46 gemessen. Das Sollmaß 44' (Figur 1) bezieht sich hier lediglich auf den über den Poltopf 13 hinausstehenden Teil der Ankerwelle 22. Dadurch können die Toleranzen des Polgehäuses 13 miteliminiert werden.

In einem weiteren Ausführungsbeispiel wird nicht die Länge der Ankerwelle 22 als Sollmaß 44 gemessen, sondern direkt das axiale Längsspiel 44 '' (in Figur 2 gestrichelt dargestellt) der Welle 22 in deren eingebauten Zustand. Dabei wird nach komplett eingebauter Ankerwelle 22 und fertig montiertem Gehäuse 16 über eine oder mehrere Öffnungen im Gehäuse 16 die Materialverdrängung 46 der Ankerwelle 22 vorgenommen. Das Ankerlängsspiel 44 '' wird mittels einer elektrischen Spannung bzw. den vom Elektromotor aufgenommenen Strom gemessen, die an den Elektromotor 12 angelegt wird. Bei großem Axialspiel erreicht der Motor 12 schon bei relativ geringer Stromstärke seine Enddrehzahl. Wird nun während der Strommessung die Länge der Ankerwelle 22 in diesem Falle verlängert, drückt die Ankerwelle 22 irgendwann axial gegen das Dämpfgummi 40. Sobald die Welle 22 das Dämpfgummi 40 berührt, entsteht ein bestimmtes Bremsmoment, das über einen Stromanstieg bzw. einen Drehzahlabfall des Motors 12 gemessen werden kann. Nimmt der Strom und/oder die Drehzahl bestimmte Werte an, ist dies ein Indiz, daß das Axialspiel eliminiert bzw. vorbestimmt eingestellt ist.

Figur 2 zeigt im Detail die Materialverdrängung 46 am Ende 29 der Ankerwelle 22. Die Materialverdrängung 46 ist ringnutförmig, das heißt, die ganze Welle umlaufend ausgeformt. Eine solche Nut 48 ist einfach mittels Rollieren herzustellen. Die Querschnittsfläche 50 der Nut 48 ist halbkreisförmig, das heißt, je stärker die Welle 22 verlängert werden muß, desto tiefer wird ein Kreisabschnitt in die Welle eingedrückt. Hierbei ist zu beachten, daß der Querschnitt 50 der Welle 22 an der Stelle der Materialverdrängung 46 nicht zu stark reduziert wird. Als ein Grenzwert wird die Reduktion des Wellendurchmessers 52 auf 50 % des ursprünglichen Wertes angesehen.

Die Querschnittsfläche 50 der ringförmigen Nut 48 weist in weiteren Ausführungsbeispielen eine andere Form als eine halbkreisförmige auf. Dies ist beispielsweise der Fall, wenn das Rollierwerkzeug 54 nicht radial ausgeformt ist, sondern eine andere beliebige Form annimmt. Mögliche Formen der Querschnittsfläche 50 sind ein Trapez 50 ' oder ein Rechteck 50 '' (gestrichelte Linien in Figur 2). Bei einem solchen Profil wird beim Rollieren von Beginn an mehr Material entlang einer Trapez- oder Rechteckseite verdrängt, während beim halbkreisförmigen Profil der Nut 48, anfangs wenig Material verdrängt wird.

Es ist ebenso denkbar, daß die Nut 48 nicht ringförmig über den ganzen Umfang der Welle 22 ausgeformt ist, sondern z.B. eine oder mehrere Kerben über den Umfang verteilt aufweist. Ein solches Verfahren erzeugt aber Schwierigkeiten hinsichtlich eines präzisen Sollmaßes 44 der Welle 22 oder kann Unwuchten erzeugen. Die Wahl der exakten Stelle der Materialverdrängung 46 ist zwischen der Stirnseite 28 und dem Schneckenansatz 26 der Motorwelle 22 variabel.

## Patentansprüche

1. Verfahren zum Herstellen einer Ankerwelle (22) eines elektromotorischen Antriebs (10), die auf ein Sollmaß (44) gebracht wird, wobei die Welle (22) mindestens an einer Stelle mittels Materialverdrängung (46) solange umgeformt wird, bis das Sollmaß (44) erreicht wird, wobei die Materialverdrängung (46) mittels Rollieren der Welle (22) ausgeführt wird.

2. Verfahren nach Anspruch 1, **dadurch gekennzeichnet, dass** die Materialverdrängung (46) in der Nähe eines Endes (29) der Welle (22) erfolgt.

3. Verfahren nach einem der Ansprüche 1 oder 2, **dadurch gekennzeichnet, dass** durch die Materialverdrängung an die Welle (22) eine Einschnürung ausgebildet wird.

4. Verfahren nach einem der Ansprüche 1 bis 3, **dadurch gekennzeichnet, dass** während der Materialverdrängung (46) die Länge der Welle (22) gemessen und die Materialverdrängung (46) mit Erreichen des vorgegebenen Sollmaßes (44) beendet wird.

5. Verfahren nach einem der Ansprüche 1 bis 4, **dadurch gekennzeichnet, dass** die Welle (22) in einen Poltopf (13) eines Elektromotors (12) eingebaut und dann die Materialverdrängung (46) vorgenommen wird.

6. Verfahren nach Anspruch 5, **dadurch gekennzeichnet, dass** die Länge des über den Poltopf (13) herausstehenden Teils der Welle (22) gemessen und mit dem Sollmaß (44) verglichen wird.

7. Verfahren nach einem der Ansprüche 1 bis 3 oder 5, **dadurch gekennzeichnet, dass** während der Materialverdrängung (46) ein Axialspiel der Welle (22) gemessen und die Materialverdrängung (46) bei Erreichen eines Axialspielsollwertes beendet wird.

8. Verfahren nach einem der vorhergehenden Ansprüche, **dadurch gekennzeichnet, dass** auf der Welle (22) auf einem Abschnitt eine Schnecke (26) aufrolliert wird und die Materialverdrängung (46) bis zum Sollmaß (44) gleichzeitig oder danach zumindest abschnittsweise auf dergleichen Arbeitsmaschine erfolgt.

9. Vorrichtung zum Verstellen von zu einem Kraftfahrzeug gehörenden Bauteilen mit einem eine Ankerwelle (22) aufweisenden elektrischen Antriebsmotor (12) und einem diesem nachgeordneten Getriebe (14), insbesondere Schneckengetriebe (24), das mit dem Antriebsmotor (12) über die Ankerwelle (22) wirkverbunden ist, **dadurch gekennzeichnet, dass** die Ankerwelle (22) mittels Materialverdrängung (46) an mindestens einer Stelle auf ein vorgegebenes Sollmaß (44) gebracht ist, mit einem Verfahren nach einem der vorhergehenden Ansprüche.

10. Vorrichtung nach Anspruch 9, **dadurch gekennzeichnet, dass** die Materialverdrängung (46) der Welle (22) an deren Ende (29) liegt.

11. Vorrichtung nach einem der Ansprüche 9 oder 10, **dadurch gekennzeichnet, dass** die Querschnittsfläche (50) der Materialverdrängung (46) halbkreisförmig ist.

12. Vorrichtung nach einem der Ansprüche 9 oder 10, **dadurch gekennzeichnet, dass** die Querschnittsfläche (50) der Materialverdrängung (46) trapezförmig oder rechteckig ist.

13. Vorrichtung nach einem der Ansprüche 9 bis 12, **dadurch gekennzeichnet, dass** die Materialverdrängung (46) den Durchmesser (52) der Welle (22) bis zur Hälfte reduziert.

14. Vorrichtung nach einem der Ansprüche 9 bis 13, **dadurch gekennzeichnet, dass** die Materialverdrängung (46) kreisringförmig ausgebildet ist.

## Claims

1. Method for producing an armature shaft (22) of an electromotive drive (10), which armature shaft is adjusted to a desired size (44), with the shaft (22) being worked at least at one point by means of material displacement (46) until the desired size (44) is reached, with the material displacement (46) being implemented by means of rolling the shaft (22).

2. Method according to Claim 1, **characterized in that** the material displacement (46) takes place in the vicinity of an end (29) of the shaft (22).

3. Method according to either of Claims 1 and 2, **characterized in that** a constriction is formed on the shaft (22) by the material displacement.

4. Method according to one of Claims 1 to 3, **characterized in that** the length of the shaft (22) is measured during the material displacement (46), and the material displacement (46) is terminated when the predefined desired size (44) is reached.

5. Method according to one of Claims 1 to 4, **characterized in that** the shaft (22) is inserted into a pole pot (13) of an electric motor (12), and then the material displacement (46) is performed.

6. Method according to Claim 5, **characterized in that** the length of that part of the shaft (22) which projects beyond the pole pot (13) is measured and compared with the desired size (44).

7. Method according to one of Claims 1 to 3 or 5, **characterized in that** an axial play of the shaft (22) is measured during the material displacement (46), and the material displacement (46) is terminated when a desired axial play value is reached.

8. Method according to one of the preceding claims, **characterized in that** a worm (26) is rolled up on one section of the shaft (22), and the material displacement (46) until the desired size (44) is reached takes place at least in sections on the same working machine at the same time or thereafter.

9. Apparatus for adjusting components which belong to a motor vehicle, having an electric drive motor (12), which has an armature shaft (22), and a gear mechanism (14), in particular a worm gear mechanism (24), which is arranged downstream of the said drive motor and is operatively connected to the drive motor (12) by means of the armature shaft (22), **characterized in that** the armature shaft (22) is adjusted to a predefined desired size (44) at at least one point by means of material displacement (46), using a method according to one of the preceding claims.

10. Apparatus according to Claim 9, **characterized in that** the material displacement (46) of the shaft (22) is carried out at the end (29) of the said shaft.

11. Apparatus according to either of Claims 9 and 10, **characterized in that** the cross-sectional area (50) of the material displacement (46) is semicircular.

12. Apparatus according to either of Claims 9 and 10, **characterized in that** the cross-sectional area (50) of the material displacement (46) is trapezoidal or rectangular.

13. Apparatus according to one of Claims 9 to 12, **characterized in that** the material displacement (46) reduces the diameter (52) of the shaft (22) down to half.

14. Apparatus according to one of Claims 9 to 13, **characterized in that** the material displacement (46) is in the form of a ring.

## Revendications

1. Procédé de fabrication d'un arbre d'induit (22) d'un entraînement par moteur électrique (10), qui est amené à une dimension de consigne (44), l'arbre (22) étant façonné au moins en un emplacement au moyen d'un refoulement de matière (46) jusqu'à ce que la dimension de consigne (44) soit atteinte, le refoulement de matière (46) étant effectué par roulage de l'arbre (22).

2. Procédé selon la revendication 1, **caractérisé en ce que** le refoulement de matière (46) a lieu à proximité d'une extrémité (29) de l'arbre (22).

3. Procédé selon l'une quelconque des revendications 1 ou 2, **caractérisé en ce que** l'on produit un rétrécissement par le refoulement de matière sur l'arbre (22).

4. Procédé selon l'une quelconque des revendications 1 à 3, **caractérisé en ce que** pendant le refoulement de matière (46), la longueur de l'arbre (22) est mesurée et le refoulement de matière (46) est terminé une fois atteinte la dimension de consigne prédéfinie (44).

5. Procédé selon l'une quelconque des revendications 1 à 4, **caractérisé en ce que** l'arbre (22) est incorporé dans un élément polaire cupuliforme (13) d'un moteur électrique (12) et ensuite le refoulement de matière (46) est effectué.

6. Procédé selon la revendication 5, **caractérisé en ce que** la longueur de la partie de l'arbre (22) dépassant au-delà de l'élément polaire cupuliforme (13) est mesurée et est comparée avec la dimension de consigne (44).

7. Procédé selon l'une quelconque des revendications 1 à 3 ou 5, **caractérisé en ce que** pendant le refoulement de matière (46), un jeu axial de l'arbre (22) est mesuré et le refoulement de matière (46) est terminé une fois atteinte une valeur de consigne de jeu axial.

8. Procédé selon l'une quelconque des revendications précédentes, **caractérisé en ce qu'**une vis sans fin (26) est roulée sur l'arbre (22) sur une portion, et le refoulement de matière (46) a lieu jusqu'à la dimension de consigne (44) simultanément ou ultérieurement, au moins en partie sur la même machine d'usinage.

9. Dispositif pour mettre en mouvement des composants appartenant à un véhicule automobile, avec un moteur d'entraînement électrique (12) présentant un arbre d'induit (22) et avec une boîte de vitesse (14) montée après celui-ci, en particulier une transmission à vis sans fin (24), qui est connectée fonctionnellement au moteur d'entraînement (12) par le biais de l'arbre d'induit (22), **caractérisé en ce que** l'arbre d'induit (22) est amené à une dimension de consigne prédéfinie (44) au moyen d'un refoulement de matière (46) en au moins un emplacement, le dispositif comprenant un procédé selon l'une quelconque des revendications précédentes.

10. Dispositif selon la revendication 9, **caractérisé en ce que** le refoulement de matière (46) de l'arbre (22) est situé à son extrémité (29).

11. Dispositif selon l'une quelconque des revendications 9 ou 10, **caractérisé en ce que** la surface en section transversale (50) du refoulement de matière (46) est en forme de demi-cercle.

12. Dispositif selon l'une quelconque des revendications 9 ou 10, **caractérisé en ce que** la surface en section transversale (50) du refoulement de matière (46) est en forme de trapèze ou de rectangle.

13. Dispositif selon l'une quelconque des revendications 9 à 12, **caractérisé en ce que** le refoulement de matière (46) réduit le diamètre (52) de l'arbre (22) de moitié.

14. Dispositif selon l'une quelconque des revendications 9 à 13, **caractérisé en ce que** le refoulement de matière (46) est réalisé en forme d'anneau circulaire.
